Europäisches Patentamt

(19) European Patent Office

Office européen des brevets

(11) Publication number : **0 507 743 A2**

## (12) EUROPEAN PATENT APPLICATION

(21) Application number : **92810250.8**

(51) Int. Cl.⁵ : **G11B 27/028**, G11B 27/28

(22) Date of filing : **02.04.92**

(30) Priority : **04.04.91 US 680293**

(43) Date of publication of application :
**07.10.92 Bulletin 92/41**

(84) Designated Contracting States :
**AT BE CH DE DK ES FR GB GR IT LI LU MC NL
PT SE**

(71) Applicant : **STENOGRAPH CORPORATION
1500 Bishop Court
Mount Prospect, Illinois 60056 (US)**

(72) Inventor : **Edge, Sam N.
1726 Kofman Parkway
Alameda, California 94501 (US)**

(74) Representative : **Kügele, Bernhard et al
c/o NOVAPAT-CABINET CHEREAU 9, Rue du
Valais
CH-1202 Genève (CH)**

(54) Information storage and retrieval systems.

(57)   A real time text translation system records audio/visual segments as well as a verbatim transcription of speech associated with the audio/visual segments and pointers that cross-index specific portions of the verbatim transcription with associated audio/visual segments. A retrieval system searches the previously stored verbatim transcription for specific words or phrases and then uses the associated pointers to allow rapid location of the audio/visual segments corresponding to the specific words or phrases located in the search. In this way, specific audio/visual segments can be located and retrieved quickly.

EP 0 507 743 A2

## BACKGROUND OF THE INVENTION

This invention relates to information storage systems that create a cross referenced file including an audio/visual recording of activities which include speech and a verbatim transcription of at least a portion of this speech, and to information retrieval systems that automatically search the verbatim transcription to locate desired portions of the audio/visual recording.

At present there are many situations where users have a need to locate specific passages of an audio or visual recording. Typically, the user must search manually through the audio or visual recording to locate the desired passage. The time spent in such searching can be tedious and extended.

For example, within the legal profession video recording is becoming more and more used as a litigation tool. Video recordings are being made of expert testimony, depositions and other evidence for later playback during discovery or in a court proceeding. When there is a need to locate a particular passage of a deposition, for example, a user will typically manually review video recordings to locate the desired segment. In a large case where there is a large volume of video recordings, this process can be so time consuming as almost to be impractical.

Similarly, the broadcast industry also has a need to find specific prerecorded segments of an audio or visual recording. The industry has large inventories of prerecorded material, and this inventory is expected to grow at a rapid pace both in the near and long term. Given the large volume of audio and video recordings, it can be quite time consuming to locate a specific recorded segment.

## SUMMARY OF THE INVENTION

Accordingly, it is an object of this invention to provide an improved information storage system to allow rapid automatic retrieval of specific desired passages of an audio or visual recording. It is another object of this invention to provide an information retrieval system that will automatically locate desired portions of an audio or visual recording, or will automatically provide an address that will allow a user to manually locate such a segment.

According to a first aspect of this invention, an information retrieval system is provided which includes means for automatically searching the entries of a composite record of the type comprising a series of audio/visual segments comprising speech at respective addresses on a recording medium, a verbatim transcription of at least a portion of said speech as a series of entries, and a series of pointers, each associated with a respective one of the entries and indicative of the address of an associated one of the audio/visual segments to locate a first entry corresponding to a desired speech segment. Once this first entry is located, the pointer associated with the entry can be used automatically to retrieve the associated audio/visual segment, or alternately the pointer can be automatically displayed to allow manual retrieval of the associated audio/visual segment.

As described in detail below, a user can automatically search the verbatim transcription for a word or phrase of interest, and then use the system described below to play back the corresponding audio/visual segment automatically. In this way, the need for manual searching of the audio/visual record is substantially eliminated.

According to a second aspect of this invention, an information storage system comprises means for providing a series of audio/visual segments comprising speech at respective addresses on a recording medium and means for recording a three part composite file. Said recording means comprises means for storing a verbatim transcription of at least a portion of the speech as a series of entries, each comprising at least one phonetic outline and corresponding plain text derived from the phonetic outline, and means for storing a series of segment pointers, each associated with a respective one of the entries and indicative of the address of an associated one of the audio/visual segments.

This three part composite file synchronizes all three of the major parts of the recording: the phonetic outline, the plain text, and the audio/visual segments.

The invention itself, together with further objects and attendant advantages, will best be understood by reference to the following detailed description, taken in conjunction with the accompanying drawings.

## BRIEF DESCRIPTION OF THE DRAWINGS

Figure 1 is a block diagram of a presently preferred embodiment of the information storage system of this invention.

Figure 2 is a flow chart of the synchronizing program executed by the computer of the system of Figure 1.

Figures 3a through 3g are flow charts of subroutines executed by the controller of Figure 2.

Figure 4 is a block diagram of an information retrieval system which incorporates a presently preferred embodiment of this invention.

Figure 5 is a flow chart of the retrieval program executed by the computer of Figure 4.

Figure 6 is a sample display generated by the system of Figure 4.

## DETAILED DESCRIPTION OF THE PRESENTLY PREFERRED EMBODIMENTS

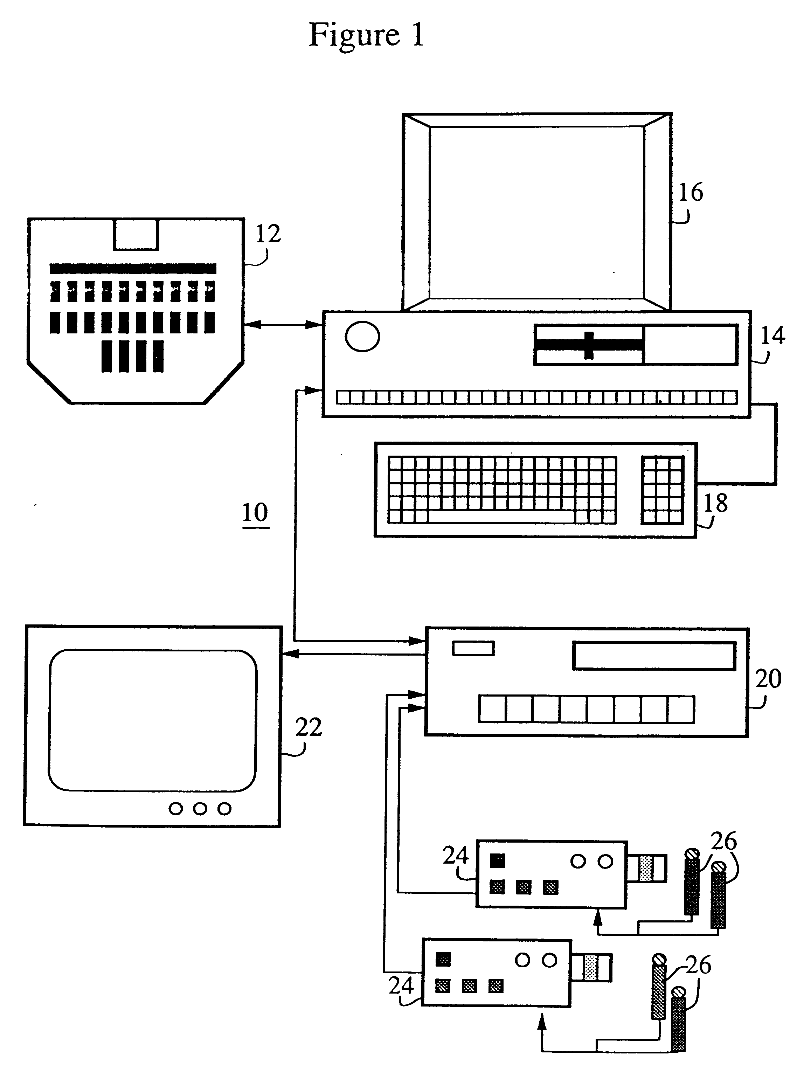

Turning now to the drawings, Figure 1 shows a block diagram of the hardware of the presently preferred embodiment 10 of the information storage system of this invention. The system 10 of Figure 1 includes a stenographic shorthand machine 12 connected to a computer 14. In the conventional way, the stenographic shorthand machine 12 generates a series of outlines which are supplied to the computer 14 via a serial port included on the stenographic shorthand machine 12 and the serial port of the computer 14. As shown, the computer 14 includes a high resolution monitor 16 and a keyboard 18.

Also as shown in Figure 1, a conventional video recorder 20 is connected to the computer 14 by means of a serial port and an RS-232 cable. This connection allows the computer 14 to supply commands to the video recorder 20 in order to control its operation, as well as to receive information from the video recorder 20, as described in greater detail below. The video recorder 20 is also connected to a video monitor or television 22 as well as to video cameras 24 and microphones 26. The number of video cameras 24 and microphones 26 can be varied to suit the application, and if desired video or audio switching equipment (not shown) can be provided to allow selection of specific ones of the cameras 24 and microphones 26.

The system 10 is intended for use for example in a courtroom or deposition setting where a court reporter uses the stenographic shorthand machine 12 to phonetically record the testimony of the proceedings, while the video recorder 20 records audio and visual signals from the microphones 26 and the cameras 24 to provide an audio/visual record of the proceedings. For example, each of the cameras 24 can be focused on a specific speaker, and the microphones 26 can be physically positioned to insure that the speech of each of the speakers is clearly recorded.

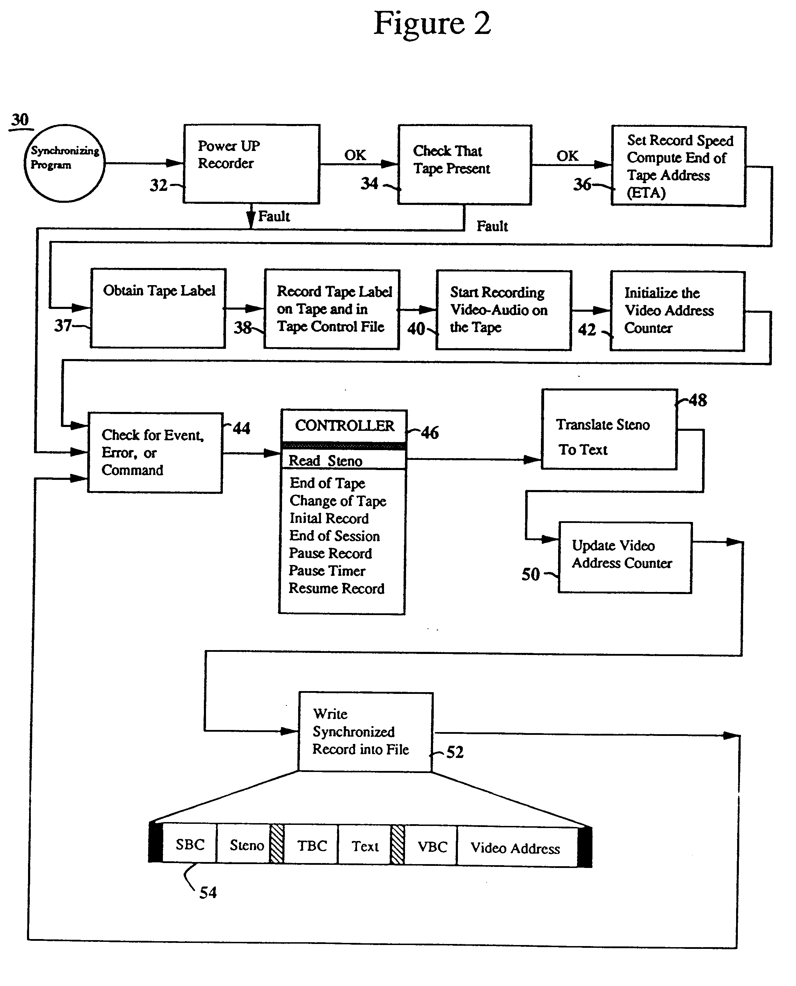

Figure 2 provides a flow chart for the program executed by the computer 14, which will be referred to herein as the synchronizing program 30. This program 30 causes the computer 14 to create a synchronized record which includes stenographic outlines generated by the stenographic shorthand machine 12, plain text translated from these outlines, as well as pointers which provide a cross-reference to associated portions of the audio/visual record made by the video recorder 20.

As shown in Figure 2, the first step in the synchronizing program 30 is to power up the recorder 20 in block 32, and then to check to insure that the recorder 20 has powered up properly. If so, the program 30 then checks in block 34 that a tape is properly installed in the recorder 20. If a fault is detected in either block 32 or 34, control passes to the controller 46 described below. The program 30 then sets the recording speed to be used by the recorder 20 and computes an end of tape address in block 36. The recorder 20 includes an internal indexing counter that maintains an address of the current video frame being recorded. The contents of this indexing counter can be read by the computer 14, and it is used in block 36 to compute the end of tape address at which the video tape in the recorder 20 will be exhausted. As explained below, this end of tape address is used to prompt the user to replace the tape before an end of tape condition is reached. The program 30 then obtains a tape label from the user in block 37 that will be used to identify the specific tape currently installed in the video recorder 20. In this embodiment the tape label is a four character field that is typed in by the user via the keyboard 18, and is then recorded on a tape control file maintained by the program 30, as well as on to the video recording tape by means of the recorder 20.

The program 30 then commands the video recorder 20 in block 40 to begin recording on the tape, and in block 42 initializes a video address counter maintained by the computer 14. This is done by reading the internal indexing counter maintained by the video recorder 20 and setting the video address counter maintained by the computer 14 equal to this indexing counter.

The computer 14 is programmed to increment the video address counter periodically at a rate that matches the recording rate of the video recorder 20 such that the video address counter maintained by the computer 14 remains equal to the indexing counter of the video recorder 20. Additionally, the video address counter is periodically matched against the indexing counter of the video recorder 20 to insure a high degree of accuracy. If at any time the video address counter maintained by the computer 14 is found not to match the indexing counter maintained by the video recorder 20, the video address counter of the computer 14 is reinitialized with the new and correct value.

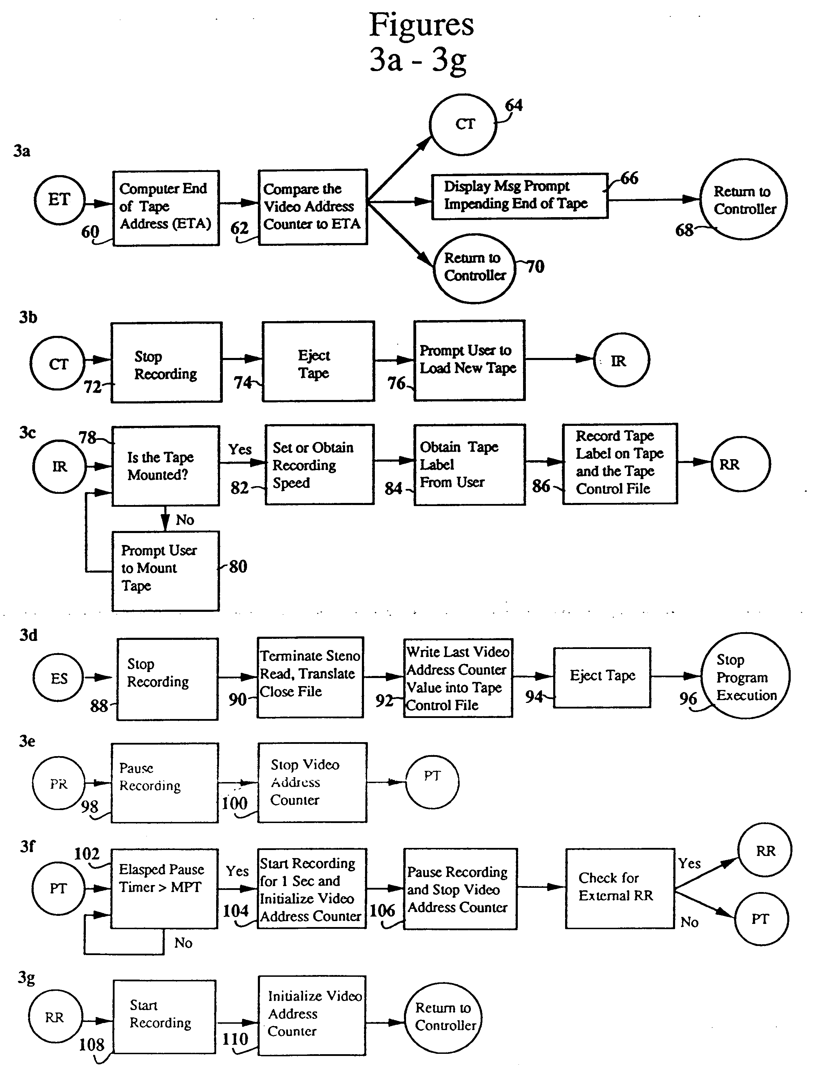

At this point, control is transferred via block 44 to a controller 46. As shown schematically in Figure 2, the controller 46 includes routines for handling a number of conditions which will be described below in detail in conjunction with Figures 3a through 3g. However, during normal operation the main task of the controller 46 is to initiate reading of stenographic outlines of the stenographic shorthand machine 12 and then to translate

3

these outlines into text and to update the video address counter. These functions are performed in blocks 48 and 50. Once this has been done, the program 30 writes a synchronized record in block 52 onto any suitable recording medium such as a magnetic disk. Reference numeral 54 schematically illustrates one of these synchronized records. As shown in Figure 2, each of the synchronized records includes the following six fields of information:

(1) A stenographic byte count (SBC) which defines the number of bytes of recorded stenographic outlines (encompassing one or more stenographic entries);

(2) The actual stenographic output made up of one or more phonetic outlines as written by the reporter on the stenographic shorthand machine 12;

(3) A text byte count (TBC) representing the number of bytes of text translated from the stenographic outlines of the synchronized record;

(4) The translated text (so called "plain text") associated with the stenographic outlines of the synchronized record;

(5) A video byte count (VBC) representing the number of bytes in the video address; and

(6) The video address corresponding to the associated text of the synchronized record.

The video address of each synchronized record is in this embodiment equal to the contents of the video address counter at a time corresponding to the associated stenographic outlines. Once the synchronized record has been stored, control is returned via block 44 to the controller 46 and the process is repeated. This process continues until the session is terminated as described below.

The controller 46 additionally processes and handles various events during steno-to-text translation and text to audio/visual synchronization. The main events processed by the controller 46 will be described in conjunction with Figures 3a through 3g. Additional events such as conventional error condition handling routines are not described in detail.

The end of tape (ET) routine is flow charted in Figure 3a. This routine is executed on a routine basis to alert the user of an impending end of tape condition. The routine computes an end of tape address (ETA) by interrogating the video recorder 20 and obtaining the video recording speed. This speed, when used with the maximum recording time for the recording tape in use, is then used in block 60 to compute the ETA. The ETA is then compared in block 62 with the current contents of the video address counter, and the routine branches in accordance with the results of this comparison. If an end of tape condition has occurred, the routine immediately branches at block 64 to the change tape (CT) routine of Figure 3. If the video address counter is within five minutes of being equal to the ETA, the routine displays a message prompt in block 66 warning the user of an impending end of tape condition. This message prompt is displayed on the monitor 16 and control is then returned at block 68 to the controller 46. In the event the video address counter is less than the ETA by more than five minutes, no action is taken and control is returned to the controller 46 at block 70.

The change tape (CT) routine of Figure 3b is executed when the recording tape has been completely recorded on and yet the recording session is to be continued. The routine of Figure 3b first commands the recorder 20 in block 72 to stop recording and then commands the recorder 20 in block 74 to eject the tape. The user is then prompted in block 76 to load a new tape and control is passed to the initiate recording (IR) routine of Figure 3c.

The initiate recording (IR) routine of Figure 3c first checks in block 78 to see if a tape has been mounted in the recorder 20. If not, the user is prompted in block 80 to mount a tape. Otherwise, the routine then sets or obtains a recording speed for the recorder 20 in block 82, obtains the tape label from the user in block 84, and then records the tape label both on the tape and on the tape control file in block 86. Control is then transferred to the resume recording (RR) routine of Figure 3g.

The end of session (ES) routine of Figure 3d is executed in response to a request to stop audio/visual recording. The routine of Figure 3d first commands the recorder in block 88 to stop recording. It then terminates reading of outlines of the stenographic shorthand machine 12, terminates translation of stenographic outlines, and closes the synchronized file in block 90. The current value of the video address counter is then written in block 92 into the tape control file, and then the tape is ejected in block 94. Program execution is then terminated in block 96.

The pause recording (PR) routine of Figure 3e is executed to cause the recorder 20 to pause recording. This command is issued in block 98. Then the video address counter maintained by the computer 14 is stopped while the recorder 20 is paused and control is transferred to the pause timer (PT) routine of Figure 3f.

The pause timer (PT) routine of Figure 3f is used to control a pause condition lasting for a longer time than allowed by the video recorder 20. Most conventional video recorders have a maximum pause time. Once this time has been exceeded, the recorder automatically stops recording or resumes recording. In the event the user requires that the recording be paused longer than the maximum pause time, the routine of Figure 3f insures proper control of the recorder 20. The routine of Figure 3f starts by comparing in block 102 an elapsed pause timer to determine whether or not it is greater than a maximum value MPT. No action is taken as long as the elapsed pause timer is less than MPT. However, once the elapsed pause timer exceeds MPT, the recorder 20 is commanded to start recording for one second and the video address counter is reinitialized in block 104. Then the recorder 20 is commanded to pause recording and the video address counter is stopped in block 106. The routine then checks to determine whether the routine of Figure 3g has been requested by the user. If so, control branches to the routine of Figure 3g. Otherwise, control is returned to the beginning of the routine of Figure 3f.

The resume recording (RR) routine of Figure 3g is executed to resume recording. This routine starts the recorder 20 in block 1OB and initializes the video address counter of the computer 14 in block 110 prior to returning control to the controller 46.

Once the synchronizing program 30 has been terminated with the ES routine of Figure 3d, the synchronized file can be used by a text processor to edit any untranslated stenographic outlines. Text may be added to the file without affecting the ability to search text which is associated with a synchronized video address. This feature provides more flexibility for the user in text manipulation. Upon the completion of any required text editing, the synchronized file is ready to be read by the full text retrieval program described above.

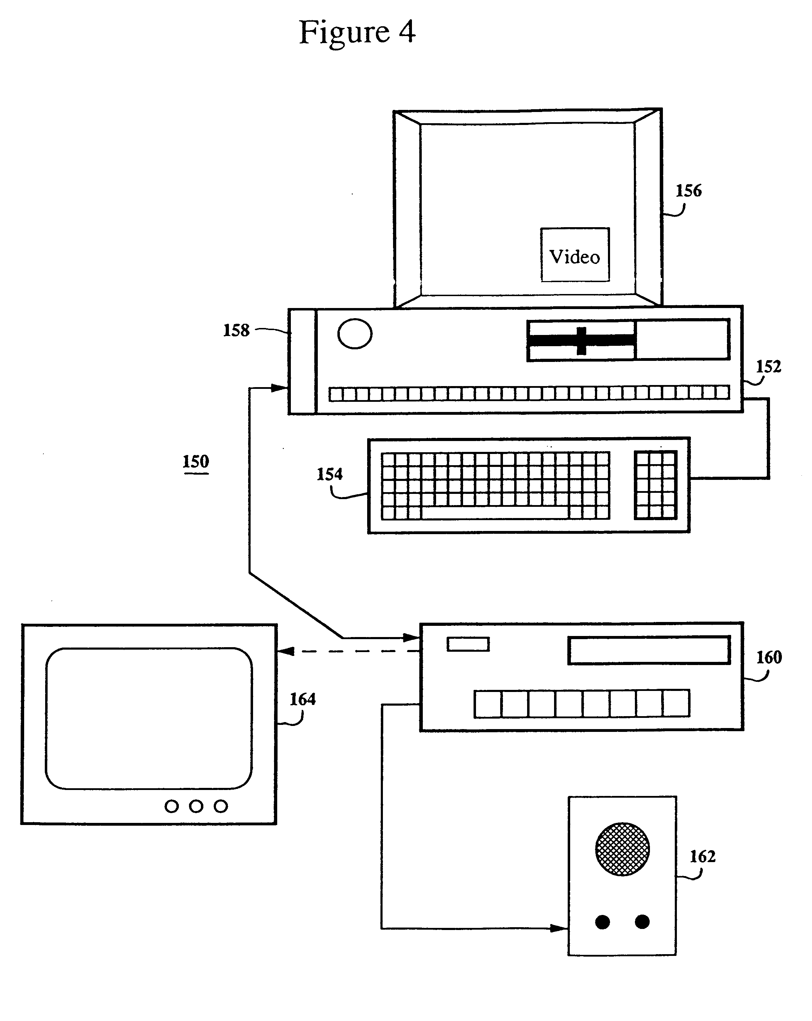

The information retrieval system 150 of Figure 4 can be used to locate specific text strings and to display the corresponding audio/visual segments. As shown in Figure 4, the retrieval system 150 includes a computer 152 which includes a keyboard 154, a high resolution monitor 156, and a full motion video card 158. A video playback device 160 is connected to the full motion video card 158 via a serial port in the playback device 160 and an RS-232 cable. The playback device 160 is connected to drive an audio speaker 162 and an optional video monitor 164. In the system 150 the audio/visual recording in the playback device 160 can be played back as a video image on the monitor 156 or on the monitor 164. The computer 152 in this preferred embodiment can be any PC-DOS personal computer. The playback device 160 may be the same device as the video recorder 20, and in this preferred embodiment is preferably a video cassette recorder.

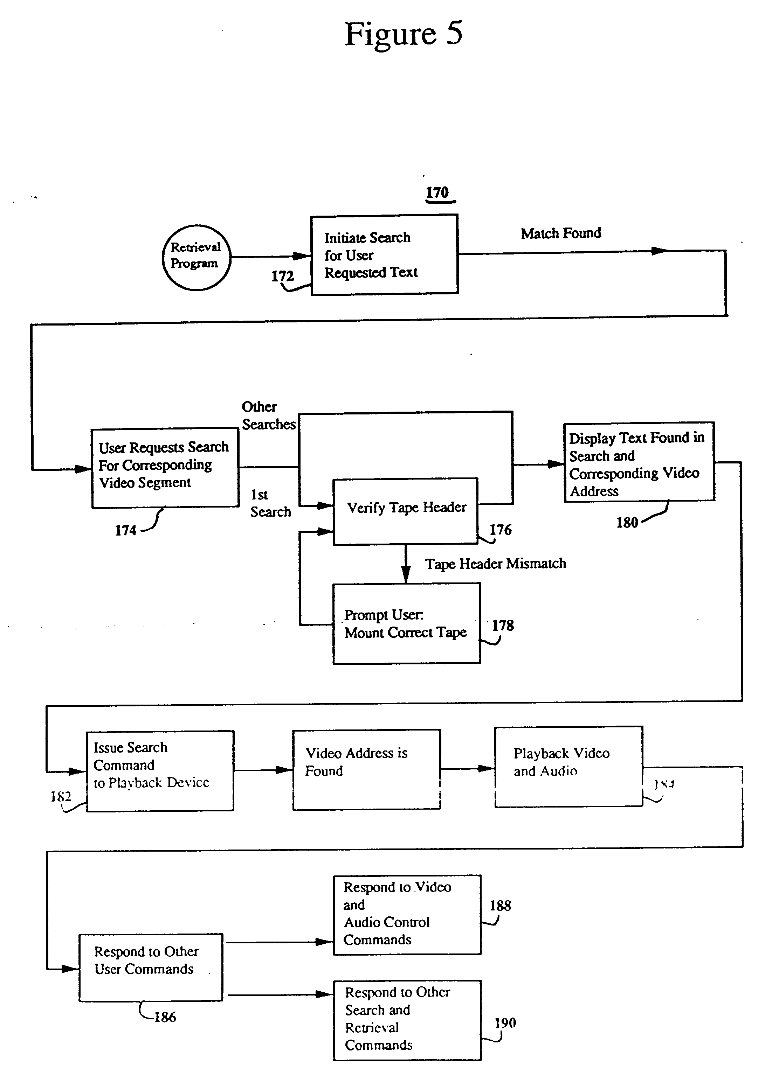

Figure 5 is a flow chart of the retrieval program 170 executed by the computer 152. This program includes a conventional full text retrieval routine that operates to locate any selected text string within a file, and which has been modified to read the plain text entries of the synchronized files generated by the computer 14 as described above. This synchronized file contains the plain text to be searched, the video addresses associated with specific parts of the text required for video synchronization, an index to the text to facilitate search and retrieval functions, and a tape control file for tape labels and associated information.

The retrieval program 170 of Figure 5 allows a user to search for any specific words or phrase directly or in conjunction with conventional boolean search criteria. The retrieval program is language independent, and it operates in block 172 to search a specific synchronized file for user requested text. When a match is found, the routine has automatically located the corresponding video segment, i.e., the video frame having a video address corresponding to the stored video address that is included in the synchronized file in association with the text located by the search of block 172. This is accomplished in block 174. The user may request to see the corresponding audio/visual segment by providing both beginning and ending addresses if the user wants a portion of the video record to be played and the playback device 160 paused at the end of the segment.

Once playback has been requested, the routine checks in block 176 to insure that the tape header of the tape in the playback device 160 corresponds to the tape header for the synchronized file in use. In the event of a tape header mismatch, the'-user is prompted in block 178 to mount the correct tape. Once the tape header has been verified, the routine then displays in block 180 the text found in the search and the corresponding video addresses. The routine then issues a search command to the play back device 160 in block 182 for the video address corresponding to the text located in the search. The program logic will compare the current video address on the video tape to the requested video address from the synchronized file. If the requested video address is greater than the current video address retrieved from the video tape, a fast forward is initiated until the correct video address is located. If the requested video address is less than the current video address on the video tape, a rewind is requested until the correct video address is located on the video tape. When the requested video address is found on the video tape, the playback device 160 is commanded to playback the video tape, and the resulting video images are displayed on the computer monitor 156, if the video card 158 is in use, or on the optional video monitor 164 otherwise. At this point, the retrieval program 170 responds to other user commands in block 186, such as video and audio control commands issued from the computer keyboard 154 and other search and retrieval commands issued from the computer keyboard 154.

The video card 158 allows the video image to be displayed in a number of formats on the monitor 156, as selected by the user. In this example, the user can command that the full screen of the monitor 156 be used to display the video image, or that 1/4 or 1/16 of the area of the screen of the monitor 156 be used for the video image. In the 1/4 or 1/16 screen mode, the video image may be moved around the screen of the video monitor (including completely or partially off of the display area). In the 1/4 or 1/16 screen mode, a partial view of the video image can be shown with complete panning capabilities. Alternately, with the 1/4 screen mode and especially with the 1/16 screen mode, the user may view the entire video image in a corner of the display of the monitor 156 while reading and manipulating text with the remainder of the monitor screen. For example, when the synchronized file and associated video tape relate to a court proceeding such as recorded testimony, the user can view the testimony and on 1/16 or 1/4 of the screen of the monitor 156, while the user follows along on the verbatim transcription of the synchronized record on the remainder of the screen. Similarly, other commands such as the initiation of other searches, retrieval the next text to be viewed, viewing new cases, appending notes and changing to a new text database may be accomplished while the video playback is viewed on the monitor 156. As shown in block 188, the user may control the playback device 160 directly from the keyboard 154 by issuing appropriate control commands including the following: pause, play, forward, fast forward, rewind, eject tape and other commands or control features supported by the playback device 160. If the user requires, video and audio playback may continue as other functions such as searches are performed by the system 150.

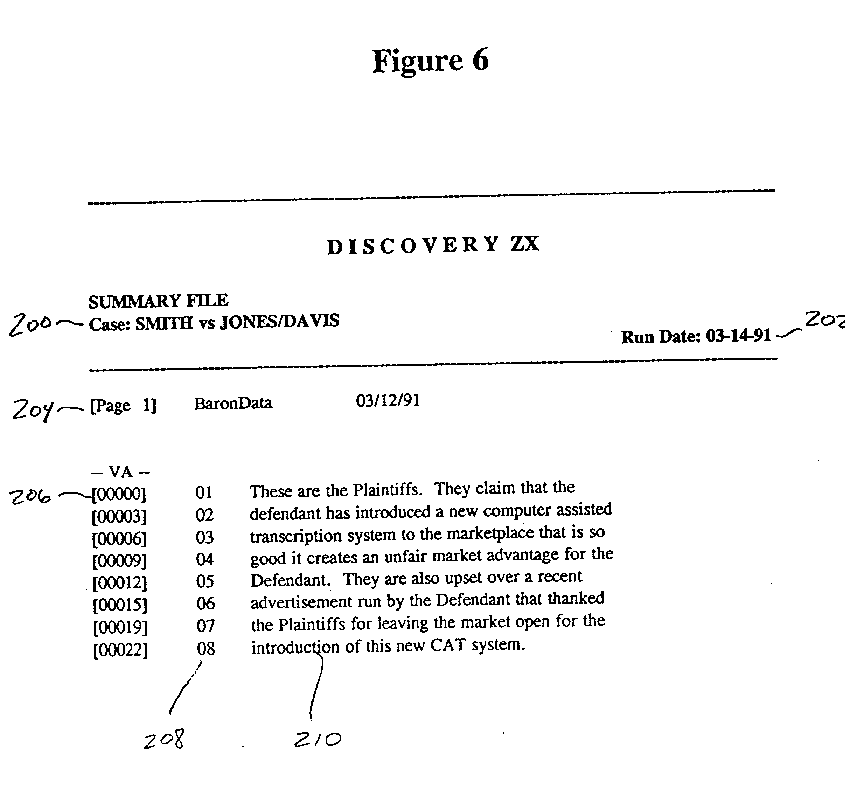

Figure 6 shows by way of example the manner in which the verbatim transcription may be displayed on the monitor 156. Note that the display includes a header which includes the case name 200, the run date 202 (the date the report was generated), the page number 204, the video address 206 corresponding to the first word in each line of text, the line number 208, and the actual text 210. As explained above, this text 210 is a verbatim transcription of the speech recorded on the associated video tape.

The system 150 allows, for example, an attorney to use full text search techniques to search and find spoken plain text words or phrases used in a large textual database. Once the required words or phrase has been found, the user may then request to see or hear the corresponding portion of the audio/visual recording. The system provides tape header information for retrieving the correct tape, and will automatically search and find the corresponding audio/visual segment and then allow the user to playback the audio/visual segment corresponding to the text located in the search. The user may then control the video playback device for repeated viewing, or may initiate a new search.

Similarly, the system 150 may be used in a audio/visual broadcast environment where there is a need to locate specific audio/visual segments that correspond to specific spoken words or phrases. The text may be in any spoken language that can be represented either now or in the future phonetically. With modern stenographic techniques, English, Spanish, German, French, Italian, Portuguese, Arabic and Korean can all be used with this invention. Of course, this list of languages is not meant to be complete or exhaustive. With the system 150, the user may use the full text search capabilities described above to search and locate specific requested portions of text. The text being searched may include comments or notes for use in finding specific audio/visual segments for ease of location or speaker identification. A broadcast user will have the ability to find the requested spoken phrase (regardless of language) and then to locate the corresponding audio/visual segment for display and playback purposes. The system 150 can be integrated into audio/visual editing software/hardware applications to facilitate the editing operation.

The display provided by the retrieval program 170 can also be used by a user to facilitate manual control of a playback device to locate the recorded segment corresponding to a specific segment of text. For example, the retrieval program 170 can be used to search automatically for the phrase "unfair market advantage" and to locate this text automatically at line 04 (Figure 6). The display indicates to the user that video address 00009 corresponds to the video frame of the first word of line 04. The user can then use conventional manual controls on the playback device 160 to advance or rewind the tape to video address 00009 for playback. In this mode of operation, the routine has not automatically commanded playback of the associated portion of the videotape, but has still provided the user with the video address that allows this function to be performed quickly and efficiently.

Table 1 lists presently preferred components suitable for use in the storage system 10 and the retrieval system 150. Though the identified components have been found suitable, the invention is of course capable of being implemented on a wide variety of other hardware.

## TABLE 1

| Reference No. | Description | Identification |
|---|---|---|
| 12 | Stenographic shorthand machine | SmartWriter (Stenograph Corp.) |
| 14, 152 | Step 486/25 personal computer | Everex Model EXO-2904C-01 |
| 16, 156 | super VGA monitor | Everex Model MON-00500-0A |
| 20, 160 | stereo video cassette recorder | NEC Model PC-VCR-PV-S98A |
| 22, 164 | video monitor | Sony Model KV-32XBR15 |
| 24 | video-audio camera | Sony Model No. CCD-V11 |
| 158 | full motion video card | Video Mail Model VMC-1E |
| 162 | amplified speaker | Radio Shack Minimus-0-8 |

The video cassette recorder identified above supports a large set of commands, controls, status codes and error codes, and can be easily connected to a computer to allow the computer to control all of the functions and to obtain all of the status information described above.

From the foregoing, it should be apparent that an improved information storage system has been described which includes a means for providing a series of audio/visual segments comprising speech at respective addresses on a recording medium. In the illustrated example, this providing means includes the video recorder 20 which actually records the audio/visual segments in real time as they occur. As explained above, this system is well suited, for example, for the recording of depositions or other ongoing events. In this case, a stenographic shorthand machine can be used to create the verbatim transcription in real time, substantially simultaneously with the recording of the audio/visual segments.

However, it is not required in all embodiments of this invention that the audio/visual segments be recorded at the same time that the verbatim transcription is created. For example, this invention can be used with a prerecorded video tape including both audio and visual segments. When used in this mode, the prerecorded video tape replayed and a stenographic shorthand machine used to create a verbatim transcription during playback rather than during original recording. In this alternative arrangement, a synchronized file is created which is quite similar to that described above, and which provides all the advantages described above in terms of high speed automatic retrieval of specific audio/visual segments.

As explained above, the system 10 includes a means for recording a verbatim transcription of speech as a series of entries. In the preferred embodiment 10, this means includes the stenographic shorthand machine 12 and associated software in the computer 14. In future it is anticipated that speech recognition systems will be developed which may for some or all applications eliminate the need for a stenographic shorthand machine and a court reporter. As used herein, the term verbatim transcription is intended broadly enough to include computer generated verbatim transcriptions which are generated by means of voice recognition techniques.

The system 10 also includes a means for automatically storing a series of pointers, each associated with specific verbatim transcription entry and indicative of the address of the associated audio/visual segment. In the preferred embodiment described above, these pointers correspond to the video addresses generated by the video recorder 20. However, in alternate embodiments other pointers may be used such as time signals or sequence signals of other types.

In the system 10 the audio/visual segments are audio and video signals recorded by the recorder 20. It is

7

not required in all embodiments of this invention that the audio/visual segments include any visual information at all. Thus, this invention is well suited for use in connection audio tapes which include no visual information of any type. Of course, this invention is not limited to any particular medium for recording audio/visual segments. The preferred embodiments discussed above utilize video tape, but magnetic disks, CD ROMS, optical drives, or other recording media may be adapted for use with this invention.

Of course, it is intended that the foregoing detailed description be regarded as illustrative rather than limiting, and that it be understood that it is the following claims, including all equivalents, which are intended to define the scope of this invention.

**Claims**

1. An information retrieval system comprising:
    means for storing a composite record comprising:
        a series of audio/visual segments comprising speech recorded at respective addresses on a recording medium;
        a verbatim plain text transcription of at least a portion of the speech recorded as a series of entries;
        a series of pointers, each associated with a respective one of the entries and indicative of the address of an associated one of the series of audio/visual segments;
    means for automatically searching the series of entries to locate a first entry corresponding to a desired speech segment in plain text; and
    means for automatically utilizing the pointer associated with the first entry to automatically retrieve the associated one of the series of audio/visual segments.

2. The invention of Claim 1 further comprising:
    means for automatically displaying the first entry and the associated one of the series of audio/visual segments together on a single display screen.

3. The invention of Claim 1 wherein the information retrieval system comprises a computer and means for playing back the series of-audio/visual segments; wherein the searching means and the utilizing means are included in the computer; and wherein the computer comprises means for controlling operation of the means for playing back the series of audio/visual segments.

4. The invention of Claim 1 wherein the recording medium comprises a machine readable label, and wherein the invention further comprises means for automatically verifying that the label corresponds to the pointer associated with the first entry.

5. An information retrieval system comprising:
    means for storing a composite record comprising:
        a series of audio/visual segments comprising speech recorded at respective addresses on a recording medium;
        a verbatim transcription of at least a portion of the speech recorded as a series of entries;
        a series of pointers, each associated with a respective one of the entries and indicative of the address of an associated one of the series of audio/visual segments;
        means for automatically displaying the pointer associated with the first entry to allow retrieval of the associated one of the series of audio/visual segments.

6. The invention of Claim 5 wherein the displaying means comprises means for automatically displaying the pointer associated with the first entry and the first entry together on a single display screen.

7. An information storage system comprising:
    means for providing a series of audio/visual segments comprising speech at respective addresses on a recording medium;
    means for recording a three part composite file, said recording means comprising:
    means for recording a verbatim transcription of at least a portion of said speech as a series of entries, each of said entries comprising at least one phonetic outline and corresponding plain text derived from the at least one phonetic outline; and
    means for automatically storing a series of segment pointers, each of said pointers associated with a respective one of said entries and indicative of the address of an associated one of the series of audio/visual segments.

8. The invention of Claim 7 wherein the transcription recording means comprises a stenographic machine operative to generate a series of outlines, and means for storing the series of outlines.

9. The invention of Claim 7 wherein the providing means comprises means for recording a visual record of said series of audio/visual segments in real time.

10. The invention of Claim 7 wherein the providing means comprises means for providing a said series of audio/visual segments as a prerecorded record.

# Figure 1

# Figure 2

30

Synchronizing Program

Power UP Recorder
32

OK →

Check That Tape Present
34

OK →

Set Record Speed Compute End of Tape Address (ETA)
36

↓ Fault

Fault

Obtain Tape Label
37

Record Tape Label on Tape and in Tape Control File
38

Start Recording Video-Audio on the Tape
40

Initialize the Video Address Counter
42

Check for Event, Error, or Command
44

CONTROLLER
46

Read Steno

End of Tape
Change of Tape
Inital Record
End of Session
Pause Record
Pause Timer
Resume Record

Translate Steno To Text
48

Update Video Address Counter
50

Write Synchronized Record into File
52

| SBC | Steno | | TBC | Text | | VBC | Video Address |

54

# Figures
# 3a - 3g

**3a**

ET → 60 Computer End of Tape Address (ETA) → 62 Compare the Video Address Counter to ETA → 64 CT

→ 66 Display Msg Prompt Impending End of Tape → 68 Return to Controller

→ 70 Return to Controller

**3b**

CT → 72 Stop Recording → 74 Eject Tape → 76 Prompt User to Load New Tape → IR

**3c**

IR → 78 Is the Tape Mounted? — Yes → 82 Set or Obtain Recording Speed → 84 Obtain Tape Label From User → 86 Record Tape Label on Tape and the Tape Control File → RR

Is the Tape Mounted? — No → 80 Prompt User to Mount Tape

**3d**

ES → 88 Stop Recording → 90 Terminate Steno Read, Translate Close File → 92 Write Last Video Address Counter Value into Tape Control File → 94 Eject Tape → 96 Stop Program Execution

**3e**

PR → 98 Pause Recording → 100 Stop Video Address Counter → PT

**3f**

PT → 102 Elasped Pause Timer > MPT — Yes → 104 Start Recording for 1 Sec and Initialize Video Address Counter → 106 Pause Recording and Stop Video Address Counter → Check for External RR — Yes → RR

Check for External RR — No → PT

Elasped Pause Timer > MPT — No

**3g**

RR → 108 Start Recording → 110 Initialize Video Address Counter → Return to Controller

12

# Figure 4

# Figure 5

**170**

```
Retrieval
Program
```

→ 172 →

```
Initiate Search
for User
Requested Text
```

Match Found →

```
User Requests Search
For Corresponding
Video Segment
```

174

Other Searches

1st Search →

```
Verify Tape Header
```

176

↓ Tape Header Mismatch

```
Prompt User:
Mount Correct Tape
```

178

```
Display Text Found in
Search and
Corresponding Video
Address
```

180

```
Issue Search
Command
to Playback Device
```

182

→

```
Video Address is
Found
```

→

```
Playback Video
and Audio
```

184

```
Respond to Other
User Commands
```

186

→

```
Respond to Video
and
Audio Control
Commands
```

188

→

```
Respond to Other
Search and
Retrieval
Commands
```

190

14

# Figure 6

---

## DISCOVERY ZX

**SUMMARY FILE**
200 — **Case: SMITH vs JONES/DAVIS**

**Run Date: 03-14-91** — 202

---

204 — [Page 1]    BaronData        03/12/91

– VA –

206 — [00000]    01    These are the Plaintiffs.  They claim that the
02    defendant has introduced a new computer assisted
03    transcription system to the marketplace that is so
04    good it creates an unfair market advantage for the
05    Defendant.  They are also upset over a recent
06    advertisement run by the Defendant that thanked
07    the Plaintiffs for leaving the market open for the
08    introduction of this new CAT system.

208        210